# EUROPEAN PATENT SPECIFICATION

(11) **EP 1 271 120 B1**
(45) Date of publication and mention of the grant of the patent: **28.12.2005**
(21) Application number: 02013673.5
(22) Date of filing: 20.06.2002
(51) Int. Cl.: G01L 3/10

(54) **Torque sensor for electronic power-assisted steering systems**
Drehmomentsensor für elektronische Servolenkungsysteme
Capteur de couple pour des systèmes de direction assistée électroniques

(30) Priority: 29.06.2001 EP 01115949
(43) Date of publication of application: 02.01.2003
(73) Proprietor: Tyco Electronics AMP GmbH, 64625 Bensheim (DE)
(72) Inventor: Bachnak, Nouhad, 67346 Speyer (DE); Stross, Stefan, 69234 Dielheim (DE)
(74) Representative: Patentanwaltskanzlei WILHELM & BECK

(56) References cited:
- DE-C- 19 834 897
- US-A- 5 585 573
- PATENT ABSTRACTS OF JAPAN vol. 015, no. 356 (P-1249), 9 September 1991 (1991-09-09) -& JP 03 137530 A (NIPPON SEIKO KK), 12 June 1991 (1991-06-12)

## Description

The invention relates to a sensor for detecting the torque on a shaft such as a steering shaft.

Torque sensors for steering shafts are already known. A torque sensor for converting a shaft torsion is shown in US 5 585 573. For example, DE 198 34 897 C1 discloses a sensor of this type used in power-assisted steering systems of modern motor vehicles to measure the forces acting on the steering assembly. The measured values obtained in this way are then supplied as controlled variables to a control unit which calculates a signal for a preferably electric or electrohydraulic power-assisted steering system. These systems typically operate such that when the steering actuating force is below a predetermined torque threshold, power assist is minimized so the driver has to apply most of the steering force. Mechanical feedback is thus imparted to the driver. Above the predetermined torque threshold, the control unit provides power assistance and therefore uniform steering actuating force, so the steering actuating force to be applied by the driver is always within a comfortable range. The "spongy driving sensation" frequently criticised previously in power-assisted steering systems can therefore be avoided.

The sensor shown in DE 198 34 897 C1 is used to detect the rotational forces in a portion of the steering shaft so that the forces introduced into the steering shaft are transmitted by a torsion bar having a measuring cell. The steering force introduced therefore causes torsion which is detected by the measuring cell and measured, for example, as a strain by strain gauges (DMS). For safety reasons, a torsional angle limit is provided in the known sensor and this limits the difference in the twisting angle between the two portions of the steering shaft connected the sensor, so that malfunctioning of the measuring cell, for example by overloading and rupture of the torsion bar, does not lead to complete failure of the steering assembly.

In particular, sensors based on DMS and optical sensors are used in the automotive industry for torque measurement based on the measuring principle of evaluating torsion.

With sensors based on DMS, twisting of a torsion bar causes extension or compression of regions of its periphery and a resultant change in the resistance of the DMS. This change in resistance is evaluated and converted into a torque measurement. However, transmission of the signals from the DMS to the electronic evaluation device involves contact so that a special coil spring including a cable and a housing for cable guidance about the steering shaft is required for this purpose.

Optical torque sensors, on the other hand, have two masks which twist relative to one another when a torque is applied to the torsion bar. The light source and the receiver are secured to the housing. Relative twisting of the masks with respect to one another causes the receiver to detect a relatively large luminous flux and accordingly gives off a proportionally large signal current. While signal transmission is contactless in the optical sensors, the measuring arrangement is sensitive to strong vibrations that as occur in vehicles.

What is needed is an improved contactless but inexpensive torque sensor that is adaptable to the high vibration environment of a vehicle.

The invention provides a sensor having a disc-shaped movement converter being mechanically connected to a first portion of a shaft such that a torsion in the shaft or a torsion bar produces an angular movement of the movement converter.

A carrier surrounds the shaft in the form of a sleeve and is floatingly mounted thereon. One end of the carrier is directed toward the movement converter which is mechanically connected thereto in such a way that the twisting angle movement of the movement converter is converted into forces acting on the carrier with a helical line of action. The other end of the carrier is designed as a connecting piece and cooperates with a movement guide rigidly connected to the second portion of the shaft in such a way that the carrier cannot move helically but only linearly in the axial direction on the shaft.

A displacement sensor is provided so that the relative axial position of the carrier can be detected to determined the torque of the shaft by converting the twisting angle movement into an axial translation movement of the carrier.

The arrangement of this invention converts the rotational movement caused by the torque, into a translation movement namely travel of the carrier. This allows the torque on a torsion bar or on a torsion shaft to be detected using contactless position sensors such as displacement sensors, which operate on an inductive or magnetic field basis, for example Hall, PLCD or differential throttle sensors.

The invention will now be described by way of example with reference to the accompanying figures of which:
Figure 1 is a lateral section of a sensor according to the invention,
Figure 2 is a cross sectional view of the sensor taken along the line X-X of Figure 1,
Figure 3 is a perspective view of the movement converter,
Figure 4 is a perspective view of the carrier,
Figure 5 is a perspective view of the movement guide of the sensor,

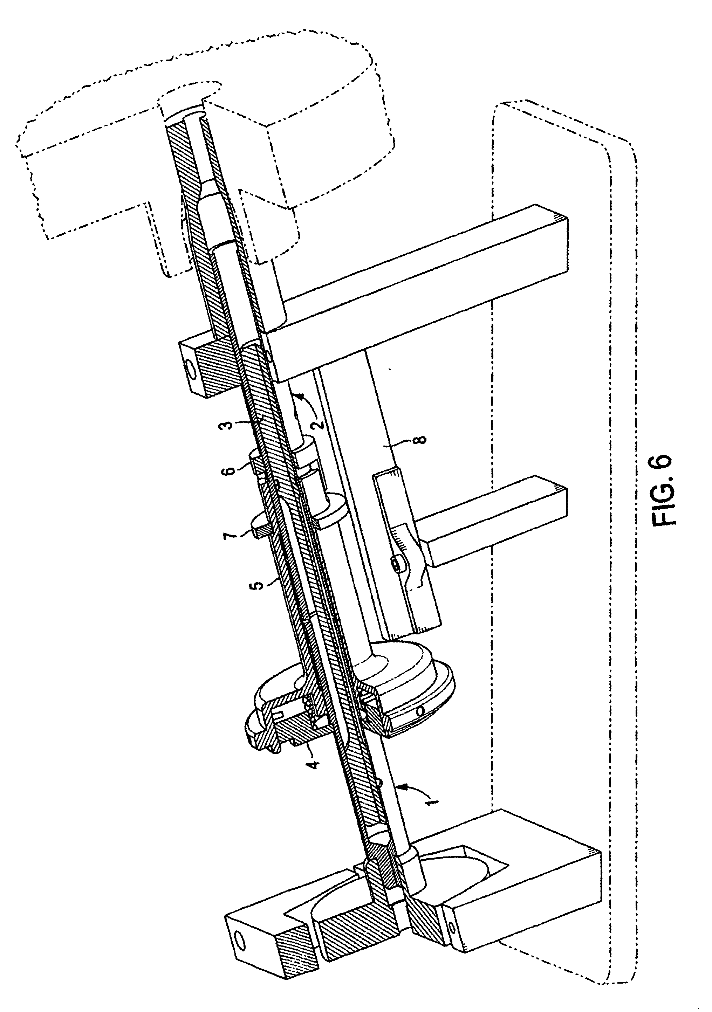

Figure 6 is a partially sectional perspective view of the sensor,
Figure 7 is a perspective view of the sensor from a different viewpoint to Figure 6.

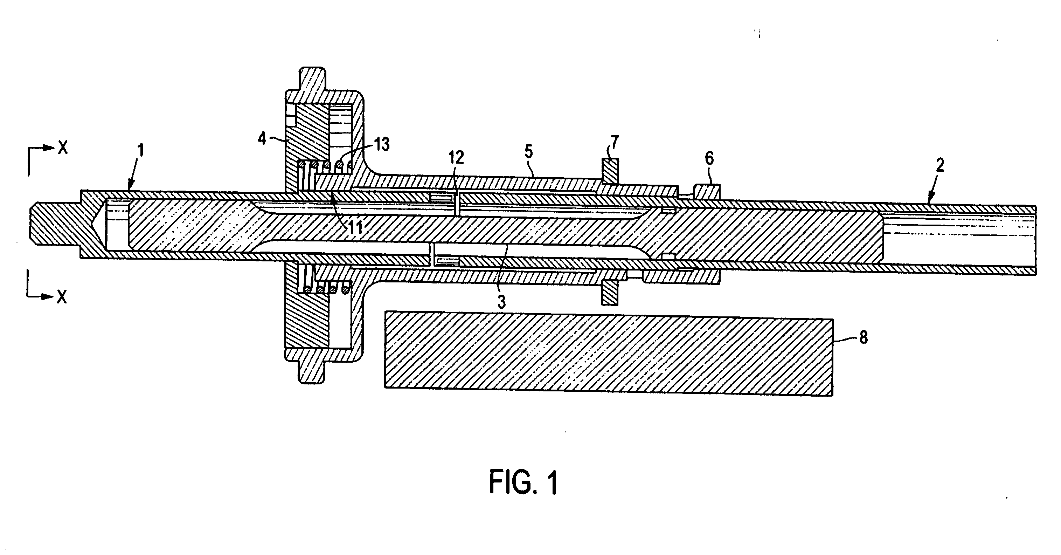

Figure 1 shows a sectional side view of a sensor substantially consisting of the two portions 1 and 2 of a steering shaft, the movement converter 4, the carrier 5, the movement guide 6 and the displacement sensor element 8. A steering wheel (not shown) of a motor vehicle is connected to the portion 2. The carrier 5 surrounding the shaft 1 and 2 like a sleeve is floatingly mounted with a fit 11 on the shaft 1 and 2. The carrier 5 can consequently be moved laterally, in other words along an axis of the shaft 1 and 2. The relative lateral position of the carrier 5 with respect to a measuring device arranged outside of the shaft 1 and 2, in particular a displacement sensor element 8, is evaluated for the measurement of the torque. A magnet 7, for example, can be arranged in a defined position on the carrier 5 for interaction with the displacement sensors.

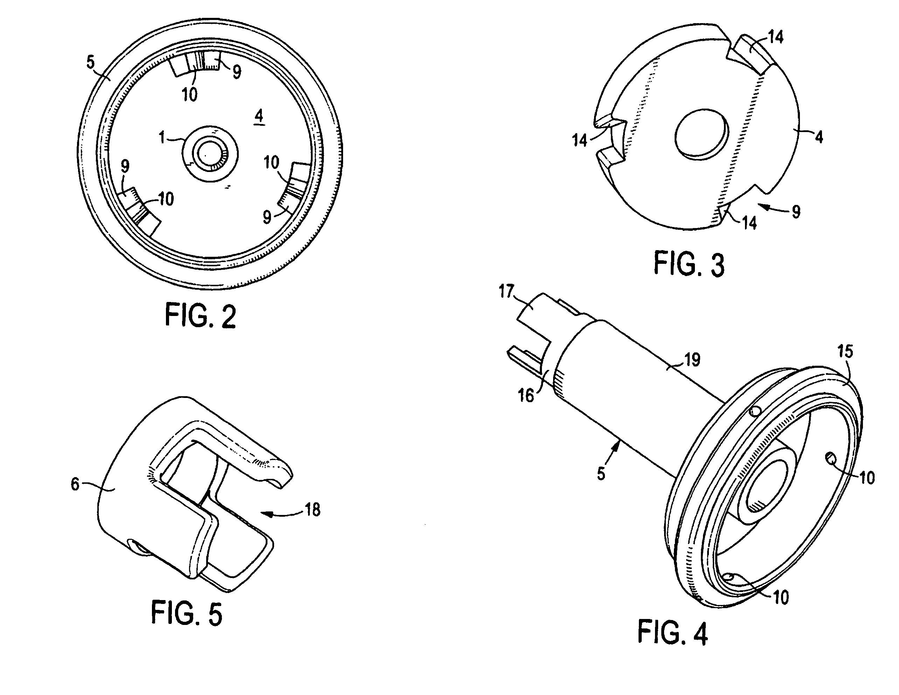

Reference is now made to Figures 3 to 5 showing three essential individual components of the sensor, each in perspective view. The disc-shaped movement converter 4 is shown in Figure 3 with a central aperture provided for fastening to the first portion 1 of the shaft. In addition, three recesses 9 are uniformly distributed over the periphery. One respective side of each recess 9 is designed as an oblique and bent-in or helical running face 14.

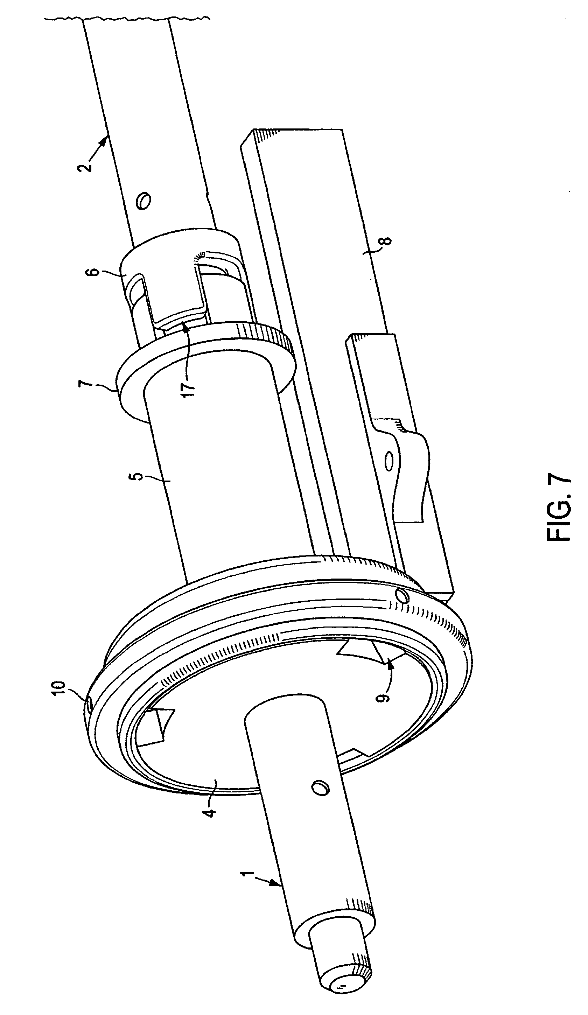

The carrier 5 in Figure 4 consists of the central sleeve-like portion 19 formed with an extension 15 at one end into which the movement converter 4 can be fitted in such a way that the pins 10 engage in the recesses 9. The other end of the carrier 5 is designed as a connecting piece 16 comprising elongate extensions 17 projecting in the axial direction and guided in corresponding grooves 18 of the movement guide 6 (Figure 7) shown in Figure 5.

Reference will now be made to Figure 1 for further explanation and, in particular, the operation of the sensor resulting from the cooperation of the individual components. The two portions 1 and 2 of the shaft are connected to one another merely by means of the torsion bar 3. During a steering process the torsion bar 3 twists about a maximum of approximately +/- 5°. The twisting or angular motion of the torsion bar 3 is linearly proportional to the torque applied thereto.

The portions 1 and 2 adjoining one another at the partition 12 are, as shown in Figure 1, designed in such a way that the two portions have respective claws which engage complementary grooves. This construction acts as a torsion angle limit and is described in detail in the above-mentioned DE 198 34 897 C1.

The movement converter 4 is rigidly connected to the portion 1 of the steering column and the movement guide 6 is rigidly connected to the portion 2 of the steering column 2 and has at least one guide groove 18. The magnet 7 is in turn rigidly connected to the carrier 5.

The carrier 5 is floatingly mounted with a fit 11 on the steering column 1 and 2, the fit 11 serving for precise movement guidance. At one end the pins 10 are located in the carrier 5 on the running faces 14 of the movement converter 4 and are biased by a spring 13 against this running face 14. Upon twisting of the torsion bar 3 the pins 10 glide along the running faces 14 and accordingly attempt to helically move the carrier 5 as a whole, i.e. to rotate and laterally displace it simultaneously. However, at the other end of the carrier 5 the rotational movement of the carrier 5 is eliminated by the movement guide 6 which is rigidly connected to the portion 2 of the steering column. Movement is only possible in the axial direction, so that the angular movement of the torsion bar 3 is converted into a displacement of the magnet 7.

The position of the magnet 7 relative to the displacement sensor element 8 is evaluated by the electronic device and the torque consequently determined. With a linear position sensor having a permanent magnet, the output signal is linearly proportional to the lateral displacement or travel of the magnet 7.

For example, the torsion bar 3 can have a thickness of approximately 5 mm at the point of taper. The thickness of the movement converter disc 4 is approximately 10 mm, of which approximately 5 mm are available for the screwing movement. The effective travel depends on the diameter of the movement converter disc 4 and on the pitch of the slightly helical running face 14. With a diameter of approximately 45 mm travel of the carrier 5 of for example approximately +/- 2.5 mm results.

The constructional design can also be configured differently from that illustrated with the same functional principle. The spring 13 for example, can be removed if the pins 10 are forcibly guided in a groove instead of in the recess 9 in both directions of movement. Because of the integration of the movement guide 6 and the movement converter 4 in the steering column 1 and 2, the number of components can be reduced and the mechanism designed more compactly.

The torque sensor can also be attached to the pinion shaft to measure the torque on the steering assembly.

The advantages over known DMS measurement consist in the contactless transmission of the signals and in the omission of a coil spring. The robust, vibration-insensitive design is advantageous in comparison with optical sensors, and is particularly useful when using a PLCD (permanent linear magnet contactless displacement) sensor.

With regard to cost-efficiency the invention provides an inexpensive alternative to the above-described known sensors. In many applications the movement converter and/or the movement guide can be integrated in the shaft.

The mechanical connection between movement converter and the carrier can be made in different ways depending on the circumstances. In a relatively inexpensive design, the movement converter comprises at least one trench-like recess at its periphery, the recess being designed at least at one trench side as a running face extending slightly helically with respect to the axial direction, and in that the end of the carrier directed toward the movement converter is widened in such a way that a respective radially inwardly arranged pin engages from the outside in the recess of the movement converter, the guide means provided causing the pin to rest on the running face.

An embodiment of the sensor according to the invention in which a spring is arranged between movement converter and carrier and with the aid of which the pin is pressed against the running face is particularly well suited to this purpose.

A further particularly advantageous embodiment of the sensor using a displacement sensor based on a magnet is provided in that non-magnetic partitions are provided between the carrier with the magnet and the displacement sensor element, through which partitions the sensor can be controlled, and this is a substantial advantage in particular in conjunction with steering or gearing housings.

By using this mechanism it is possible to place the control magnets of a sensor on the steering column while the sensor element itself and the electronic evaluation device can be attached to the car body.

The applications of the sensor according to the invention are not limited to torque measurements in steering assemblies. It can also be provided in other applications functioning on the basis of a torsion bar. In particular in relatively short shafts, for example in household appliances, the sensor can also be attached without torsion bar, directly to a torsion shaft, the two portions 1 and 2 simply being provided by the opposing ends of the one-piece torsion shaft.

## Claims

1. A sensor for detecting the torque on a shaft having two coaxially arranged portions (1, 2), the two portions (1, 2) together adapted to form a torsion shaft or to connected by a torsion bar (3) so that a torque acting on the shaft can be evaluated by the twisting of the shaft or the torsion bar (3) caused thereby, wherein:
a disc-shaped movement converter (4) rigidly connected mechanically to a first portion (1) of the shaft arranged in the manner of an axle with respect to the movement converter (4) is provided, so that the torsion shaft or the torsion bar (3) are adapted to produce an angular movement of the movement converter (4),
a carrier (5) surrounding the shaft and adapted to be floatingly mounted thereon with a fit (11) is provided,
the one end of said carrier (5) directed toward the movement converter (4) is arranged to be mechanically connected thereto in such a way that the angular movement of the movement converter (4) is converted into helical forces acting on the carrier (5),
while the other end, of said carrier (5) is designed as a connecting piece (16) and is arranged to cooperate with a movement guide (6) rigidly connected mechanically to the second coaxially arranged portion (2) of the shaft in such a way that the carrier (5) is arranged so that it cannot move helically but only linearly in the axial direction on the shaft, and
a displacement sensor is provided and is arranged so that via said displacement sensor the relative axial position of the carrier (5) with respect to a displacement sensor element (8) can be detected so that the torque of the shaft can be determined by the angular movement converted into an axial translation movement of the carrier (5).

2. Sensor according to claim 1, wherein the movement converter (4) has at least one trench-like recess (9) at its periphery, designed at least at one trench side as a running face (14) extending slightly helically with respect to the axial direction, and
the end of the carrier (5) directed toward the movement converter (4) is widened in such a way that a respective radially inwardly arranged pin (10) is adapted to engage from the outside in the recess (9) of the movement converter (4), and wherein said sensor comprises guide means (13) arranged to cause the pin (10) to rest on the running face (14).

3. Sensor according to claim 2, wherein a spring (13), adapted to press the pin (10) against the running face (14), is arranged between movement converter (4) and carrier (5).

4. Sensor according to claim 2, wherein the recess (9) in the movement converter (4) is designed as a groove in which the pin (10) is adapted to be forcibly guided in both directions of torsion and rotational movement.

5. Sensor according to any of claims 2 to 4, wherein three recesses (9) uniformly distributed over the periphery are provided in the movement converter (4).

6. Sensor according to any of claims 1 to 5, wherein the movement converter (4) and/or the movement guide (6) are integrated in the shaft.

7. Sensor according to any of claims 1 to 6, wherein the connecting piece (16) has elongate extensions (17) extending in the axial direction and guided in corresponding grooves (18) in the movement guide (6).

8. Sensor according to any of claims 1 to 7, wherein a Hall sensor or a PLCD sensor or a differential throttle sensor is provided as displacement sensor element (8) and in that a magnet (7) is arranged on the carrier (5) and is arranged to be mechanically rigidly connected to the carrier (5).

9. Sensor according to claim 8, wherein non-magnetic partitions are provided between the carrier (5) with the magnet (7) and the displacement sensor element (8).

## Patentansprüche

1. Sensor für das Nachweisen des Drehmomentes auf eine Welle mit zwei koaxial angeordneten Abschnitten (1, 2), wobei die zwei Abschnitte (1, 2) zusammen so ausgebildet sind, dass sie eine Drehmomentwelle bilden oder durch einen Drehstab (3) so verbunden werden, dass ein Drehmoment, das auf die Welle wirkt, durch das dadurch hervorgerufene Verdrehen der Welle oder des Drehstabes (3) bewertet werden kann, worin:
ein scheibenförmiger Bewegungswandler (4), der starr mechanisch mit einem ersten Abschnitt (1) der Welle verbunden ist, angeordnet in der Art und Weise einer Achse mit Bezugnahme auf den Bewegungswandler (4), vorhanden ist, so dass die Drehmomentwelle oder der Drehstab (3) so ausgeführt sind, dass eine Winkelbewegung des Bewegungswandlers (4) bewirkt wird;
ein Träger (5) vorhanden ist, der die Welle umgibt und so ausgeführt ist, dass er schwimmend daran mit einer Passung (11) montiert ist;
wobei das ein Ende des Trägers (5), das in Richtung des Bewegungswandlers (4) gerichtet ist, so angeordnet ist, dass es mechanisch damit in einer derartigen Weise verbunden wird, dass die Winkelbewegung des Bewegungswandlers (4) in schraubenförmige Kräfte umgewandelt wird, die auf den Träger (5) wirken,
während das andere Ende des Trägers (5) als ein Verbindungsstück (16) konstruiert und so angeordnet ist, dass es mit einer Bewegungsführung (6) zusammenwirkt, die starr mechanisch mit dem zweiten koaxial angeordneten Abschnitt (2) der Welle in einer derartigen Weise verbunden ist, dass der Träger (5) so angeordnet wird, dass er sich nicht schraubenförmig sondern nur linear in der axialen Richtung auf der Welle bewegen kann; und
ein Verschiebungssensor vorhanden und so angeordnet ist, dass mittels des Verschiebungssensors die relative axiale Position des Trägers (5) mit Bezugnahme auf ein Verschiebungssensorelement (8) nachgewiesen werden kann, so dass das Drehmoment der Welle durch die Winkelbewegung ermittelt werden kann, die in eine axiale Translationsbewegung des Trägers (5) umgewandelt wird.

2. Sensor nach Anspruch 1, bei dem der Bewegungswandler (4) mindestens eine grabenartige Aussparung (9) auf seinem Umfang aufweist, die mindestens auf einer Grabenseite als eine Lauffläche (14) konstruiert ist, die sich etwas schraubenförmig mit Bezugnahme auf die axiale Richtung erstreckt, und
das Ende des Trägers (5), das in Richtung des Bewegungswandlers (4) gerichtet ist, in einer derartigen Weise aufgeweitet ist, dass ein entsprechender radial nach innen angeordneter Stift (10) so ausgeführt ist, dass er von der Außenseite der Aussparung (9) des Bewegungswandlers (4) in Eingriff kommt, und
bei dem der Sensor eine Führungseinrichtung (13) aufweist, die so angeordnet ist, dass sie bewirkt, dass der Stift (10) auf der Lauffläche (14) liegt.

3. Sensor nach Anspruch 2, bei dem eine Feder (13), die so ausgeführt ist, dass sie den Stift (10) gegen die Lauffläche (14) presst, zwischen dem Bewegungswandler (4) und dem Träger (5) angeordnet ist.

4. Sensor nach Anspruch 2, bei dem die Aussparung (9) im Bewegungswandler (4) als eine Nut konstruiert ist, in der der Stift (10) so eingerichtet wird, dass er in beiden Richtungen der Torsions- und Rotationsbewegung zwangläufig geführt wird.

5. Sensor nach einem der Ansprüche 2 bis 4, bei dem drei Aussparungen (9), die gleichmäßig über den Umfang verteilt sind, im Bewegungswandler (4) vorhanden sind.

6. Sensor nach einem der Ansprüche 1 bis 5, bei dem der Bewegungswandler (4) und/oder die Bewegungsführung (6) in der Welle integriert sind.

7. Sensor nach einem der Ansprüche 1 bis 6, bei dem das Verbindungsstück (16) längliche Verlängerungen (17) aufweist, die sich in der axialen Richtung erstrecken und in den entsprechenden Nuten (18) in der Bewegungsführung (6) geführt werden.

8. Sensor nach einem der Ansprüche 1 bis 7, bei dem ein Hallsensor oder ein PLCD-Sensor oder ein Differentialdrosselsensor als Verschiebungssensorelement (8) bereitgestellt werden, und bei dem ein Magnet (7) auf dem Träger (5) angeordnet und so eingerichtet ist, dass er mechanisch starr mit dem Träger (5) verbunden wird.

9. Sensor nach Anspruch 8, bei dem nichtmagnetische Trennwände zwischen dem Träger (5) mit dem Magneten (7) und dem Verschiebungssensorelement (8) vorhanden sind.

## Revendications

1. Capteur pour détecter le couple appliqué à un arbre comportant deux parties à agencement coaxial (1, 2), les deux parties (1, 2) étant destinées à former ensemble un arbre de torsion ou à être connectées par une barre de torsion (3), de sorte qu'un couple agissant sur l'arbre peut être évalué par la torsion résultante de l'arbre ou de la barre de torsion (3), comportant:
un convertisseur du mouvement en forme de disque (4) connecté de manière rigide et mécanique à une première partie (1) de l'arbre agencé à la manière d'un essieu par rapport au convertisseur du mouvement (4), de sorte que l'arbre de torsion ou la barre de torsion (3) sont destinés à produire un déplacement angulaire du convertisseur du mouvement (4),
un support (5) entourant l'arbre et destiné à y être monté par flottement par un ajustement (11); dans lequel
une extrémité dudit support (5) dirigée vers le convertisseur du mouvement (4) est agencée de sorte à y être connectée de manière mécanique, le déplacement angulaire du convertisseur du mouvement (4) étant ainsi converti en des forces hélicoïdales agissant sur le support (5),
l'autre extrémité dudit support (5) a la forme d'une pièce de connexion (16) et est agencée de sorte à coopérer avec un guide du mouvement (6) connecté de manière rigide et mécanique à la deuxième partie à agencement coaxial (2) de l'arbre, le support (5) étant ainsi agencé de sorte qu'il ne peut pas effectuer un déplacement hélicoïdal, mais uniquement un déplacement linéaire dans la direction axiale sur l'arbre, et comportant
un capteur de déplacement, agencé de sorte que ledit capteur de déplacement permet de détecter la position axiale relative du support (5) par rapport à un élément capteur du déplacement (8), le couple agissant sur l'arbre pouvant ainsi être déterminé par le déplacement angulaire converti en une déplacement axial par translation du support (5).

2. Capteur selon la revendication 1, dans lequel:
le convertisseur du mouvement (4) comporte au moins un évidement en forme de sillon (9) au niveau de sa périphérie, ayant au moins au niveau d'un côté du sillon la forme d'une face à déplacement (14) s'étendant de manière légèrement hélicoïdale par rapport à la direction axiale, et
l'extrémité du support (5) dirigée vers le convertisseur du mouvement (4) est élargie de sorte qu'une goupille agencée radialement vers l'intérieur (10) est destinée à s'engager de l'extérieur dans l'évidement (9) du convertisseur du mouvement (4) ledit capteur comprenant un moyen de guidage (13) destiné à maintenir la goupille (10) sur la face à déplacement.

3. Capteur selon la revendication 2, dans lequel un ressort (13), destiné à presser la goupille (10) contre la face à déplacement (14) est agencé entre le convertisseur du mouvement (4) et le support (5).

4. Capteur selon la revendication 2, dans lequel l'évidement (9) dans le convertisseur du mouvement (4) a la forme d'une rainure dans laquelle la goupille (10) est guidée de force dans les deux directions du déplacement par torsion et par rotation.

5. Capteur selon l'une quelconque des revendications 2 à 4, dans lequel trois évidements (9) répartis de manière uniforme au-delà de la périphérie sont agencés dans le convertisseur de mouvement (4).

6. Capteur selon l'une quelconque des revendications 1 à 5, dans lequel le convertisseur du mouvement (4) et/ou le guide du mouvement (6) sont intégrés dans l'arbre.

7. Capteur selon l'une quelconque des revendications 1 à 6, dans lequel la pièce de connexion (16) comporte des extensions allongées (17) s'étendant dans la direction axiale et guidées dans des rainures correspondantes (18) dans le guide du mouvement (6).

8. Capteur selon l'une quelconque des revendications 1 à 7, dans lequel un capteur à effet Hall, un capteur PLCD ou un capteur à poussée différentielle sert d'élément capteur du déplacement (8), un aimant (7) étant agencé sur le support (5) et étant destiné à être connecté de manière rigide et mécanique au support (5).

9. Capteur selon la revendication 8, dans lequel des cloisons non magnétiques sont agencées entre le support (5) comportant l'aimant (7) et l'élément capteur du déplacement (8).
